# FASCICULE DE BREVET EUROPEEN

(11) **EP 0 553 017 B1**
(45) Date de publication et mention de la délivrance du brevet: **28.08.1996**
(21) Numéro de dépôt: 93400112.4
(22) Date de dépôt: 19.01.1993
(51) Int. Cl.: F16H 63/20, F16H 63/38

(54) **Boîtier de commande interne de mécanisme de changement de vitesses**
Innere Schalteinheit von einem Gangschaltmechanismus
Internal control unit of a gear shift mechanism

(30) Priorité: 21.01.1992 FR 9200579
(43) Date de publication de la demande: 28.07.1993
(73) Titulaire: REGIE NATIONALE DES USINES RENAULT S.A., F-92109 Boulogne Billancourt (FR)
(72) Inventeur: Bremaud, Jean, F-78180 Montigny-Le-Bretonneux (FR)

(56) Documents cités:
- EP-A- 0 394 556
- GB-A- 2 136 896
- US-A- 4 277 983
- PATENT ABSTRACTS OF JAPAN vol. 7, no. 249 (P-234)(1394) 5 novembre 1983 & JP-A-58 132 820 (FUJI JUKOGYO) 8 août 1983

## Description

L'invention concerne les boîtes de vitesse mécaniques. Plus précisément, elle trouve son application sur les boîtes de vitesses mécaniques à commande "mono-barre", c'est-à-dire les boîtes de vitesses mécaniques dont la commande par le conducteur à partir de son levier de changement de vitesses est transmise à l'intérieur d'un carter appelé carter de mécanisme, par l'intermédiaire d'une seule barre, ou axe de commande.

Sur la plupart des boîtes de vitesses mécaniques "mono-barre", l'axe de commande se déplace en rotation lors de la sélection des vitesses, ou pour être plus exact, de la sélection d'une ligne de vitesses par le conducteur, tandis que sa translation permet d'engager ou de passer une vitesse, sur la ligne sélectionnée, l'entrée en prise et le dégagement des pignons de vitesse correspondants s'effectuant, de façon classique, au moyen de fourchettes et de crabots, en réponse aux déplacements de l'axe de commande, par l'intermédiaire d'un système de commande localisé obligatoirement entre l'axe de commande et les crabots. La fonction d'un tel système est de transmettre, après transformation, les mouvements de l'axe de commande à l'intérieur du mécanisme de changement de vitesses proprement dit.

La publication FR-A-2 389 508, relative à un mécanisme de changement de vitesses, décrit à ce sujet un dispositif de commande comportant notamment un boîtier fixé sur le dessus du carter de mécanisme de la transmission. Ce dispositif est muni d'un bras de manoeuvre permettant de transmettre à l'intérieur du carter les mouvements de rotation et de translation d'un axe de commande actionné par le conducteur, à partir de son levier de changement de vitesse.

Par ailleurs, il est aujourd'hui connu de disposer un boîtier de commande remplissant les mêmes fonctions que celui qui est mentionné dans la publication FR-A-2 389 508, non pas à l'extérieur du carter de mécanisme, mais à l'intérieur de celui-ci. Un manuel d'atelier publié au Japon en 1988 par la firme MAZDA, mentionne sur un schéma éclaté de boîte de vitesses un boîtier de commande interne transmettant au mécanisme de changement de vitesses les consignes de sélection et de passage. Ce boîtier, fixé sur le carter d'embrayage, à l'intérieur du carter de mécanisme, intègre les fonctions de sélection et de passage des vitesses ainsi que de rappel de sélection. En revanche, selon ce document, la fonction de "billage", procurant au conducteur au travers de son levier une sensation de résistance de la part du mécanisme, est assurée indépendamment du boîtier de commande, au moyen de billes et de ressorts associés aux différents axes de fourchettes. De même, la fonction de "verrouillage" des axes de fourchettes non sélectionnés, est indépendante du boîtier de commande, et associée aux axes de fourchettes.

La publication EP-A-0.394.556 décrit un autre système de verrouillage et de billage pour boîte de vitesses mécanique, selon lequel un verrou, rapporté sur l'axe de commande interne de la boîte, coopère avec une plaque en tôle fixée sur le carter de celle-ci et illustre le préambule de la revendication 1.

L'invention a pour but de simplifier l'ensemble des mécanismes de commande d'une transmission mécanique à commande "monobarre", et notamment de réduire le nombre de billages et de systèmes de verrouillage nécessaires. Elle propose, à cet effet un boîtier de commande interne compact, intégrant un nombre important de fonctions.

Elle concerne un mécanisme de commande interne de boîte de vitesses comportant un doigt de manoeuvre des crabots de la boîte, solidaire en translation et en rotation d'un verrou de façon à assurer la sélection et le déplacement desdits crabots sous le contrôle d'un axe de commande externe pénétrant à l'intérieur du carter du mécanisme de la transmission, des organes de billage des vitesses et des organes de verrouillage des lignes de vitesses non sélectionnées. Ce mécanisme est caractérisé en ce que ledit doigt de manoeuvre, ledit verrou et lesdits organes de billage et de verrouillage sont regroupés dans un boîtier de commande interne fixé sur le carter d'embrayage de la transmission, et en ce que le verrou est solidaire d'un levier de commande relié à l'axe de commande externe, et qui se déplace sur un axe vertical lui-même monté sur un élément dudit boîtier.

Selon un mode de réalisation de l'invention, le boîtier intègre également des organes de rappel de sélection et d'interdiction de passage en marche arrière.

Selon un mode de réalisation de l'invention, l'axe de commande porte un doigt de commande solidaire en rotation de celui-ci de façon à déplacer en translation un verrou responsable de la sélection d'une ligne de vitesses.

Selon un mode de réalisation de l'invention, le doigt de commande présente une extrémité sphérique pénétrant à l'intérieur d'un levier de commande solidaire en translation du verrou, et mobile en rotation autour de leur axe de translation commun, en réponse aux mouvements de translation de l'axe de commande.

Selon un mode de réalisation de l'invention, le levier de commande porte un doigt de manoeuvre s'engageant dans l'un des crabots de la transmission, en réponse à la translation du levier de commande et du verrou.

Selon un mode de réalisation de l'invention, le verrou présente deux tenons disposés de part et d'autre du doigt de manoeuvre, et destinés à immobiliser les crabots non sélectionnés.

Selon un mode de réalisation de l'invention, la translation de l'axe de commande et la rotation du levier de commande en résultant assurent le passage d'une vitesse, grâce au déplacement longitudinal de l'axe de fourchette solidaire du crabot sélectionné.

Selon un mode de réalisation de l'invention, l'extrémité du levier de commande opposée au doigt de commande, porte un doigt de guidage pouvant se déplacer à l'intérieur d'une grille de vitesses de façon à contrôler les mouvements du levier de commande et du doigt de manoeuvre.

Selon un mode de réalisation de l'invention, la grille de vitesses est ménagée sur une plaque support solidaire du boîtier.

Selon un mode de réalisation de l'invention, la position des vitesses est assurée par une cartouche de billage solidaire du verrou.

Selon un mode de réalisation de l'invention, la cartouche de billage porte un ressort de billage permettant d'engager et de maintenir une bille dans l'une des trois gorges ménagées sur le levier de commande.

Selon un mode de réalisation de l'invention, le rappel de sélection est assuré par un ressort de rappel de sélection monté sur le corps de la cartouche de billage, une première extrémité de ce ressort étant en appui sur un premier doigt de rappel, solidaire du verrou, tandis que sa seconde extrémité est en appui sur un second doigt de rappel, solidaire de la plaque support .

Selon un mode de réalisation de l'invention, le verrou présente une joue pouvant se déplacer à l'intérieur d'une lumière de forme allongée ménagée sur la plaque support, de façon à guider le verrou en translation, et à interdire sa rotation.

Selon un mode de réalisation de l'invention, la plaque support est munie d'un loqueteau situé en regard de la grille de vitesses, de façon à interdire le passage de cinquième en marche arrière.

Selon un mode de réalisation de l'invention, le loqueteau est libre en rotation sur un axe porté par la plaque support, autour duquel est enroulé un ressort dont une première extrémité est en appui sur un premier doigt d'arrêt solidaire de la plaque support et une seconde extrémité est en appui sur un second doigt d'arrêt solidaire du loqueteau.

L'invention sera mieux comprise à la lecture de la description suivante d'un mode de réalisation particulier de celle-ci, en liaison avec les dessins annexés, sur lesquels :
- la figure 1 est un schéma d'ensemble d'un mécanisme de transmission muni du boîtier de commande interne de l'invention,
- la figure 2 et un schéma simplifié en perspective mettant en évidence les principaux éléments constitutifs du boîtier de commande de l'invention,
- la figure 3 est une vue du boîtier de commande selon la flèche B de la figure 1.

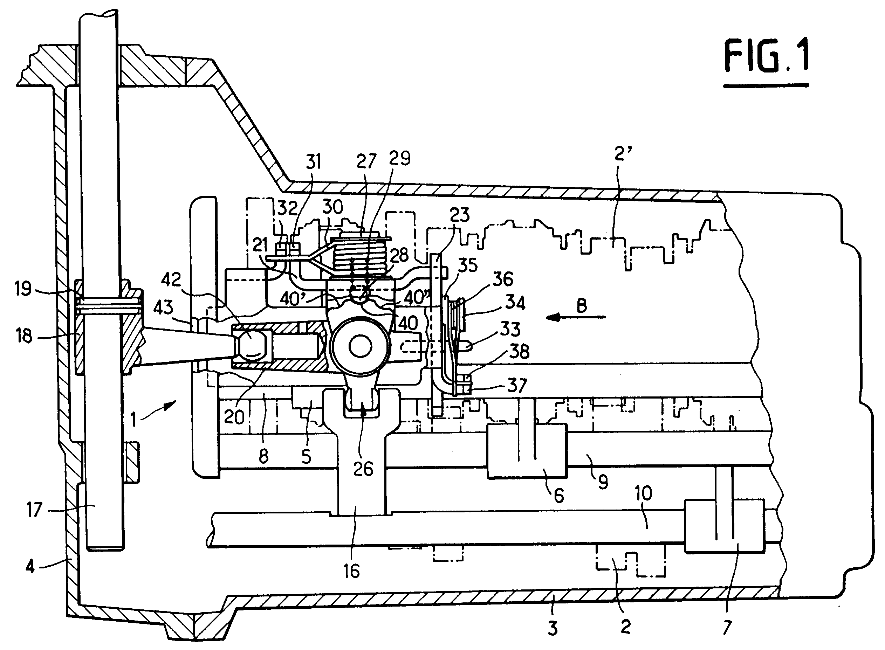

Sur la figure 1, on a fait apparaître, l'axe de commande 17 de la transmission, raccordé au levier de changement de vitesses du conducteur, et pénétrant à l'intérieur du carter de mécanisme 3, le long du carter d'embrayage 4. Le profil général de l'axe primaire 2 et de l'axe secondaire 2' de la transmission sont représentés en traits interrompus, sans que le détail des pignons fous, des synchroniseurs et des baladeurs portés par l'axe secondaire 2' soit mentionné, afin de ne pas surcharger le dessin. Les axes de fourchettes 8, 9, 10 portant les fourchettes 14, 15, 16 de commande des vitesses, s'étendent parallèlement à l'axe primaire 2 et à l'axe secondaire 2'. L'axe 8 et la fourchette 5 commandent le passage des premier et second rapport de marche avant, l'axe 9 et la fourchette 6 commandent le passage des troisième et quatrième rapport de marche avant, et l'axe 10 et la fourchette 7 commandent le passage du cinquième rapport de marche avant et de la marche arrière. Seul le crabot 16 de l'axe 10 est mentionné sur cette figure. Le mécanisme de transmission comporte bien entendu un crabot 14 associé à l'axe 8 et un crabot 15 associé à l'axe 9, ces deux crabots 14, 15 n'ayant pas été représentés sur cette figure pour des raisons de clarté.

Dans la partie gauche de la figure 1, on remarque un doigt de commande 18, fixé sur l'axe de commande 17 par une goupille 19, et pénétrant à l'intérieur du boîtier de commande interne 1 de la transmission par une ouverture 43. Le doigt 18 porte à son extrémité une rotule 42 engagée à l'intérieur d'un levier de commande 20. Un doigt de manoeuvre 26 est fixé sur le levier de commande 20. Sur l'exemple représenté, le doigt de manoeuvre 26 est engagé dans le crabot 16 d'actionnement de l'axe de fourchette 10. L'extrémité du levier de commande 20 opposée au doigt de commande 18 porte un doigt de guidage 33, s'étendant au travers d'une plaque support 23 constituant la partie supérieure et arrière du boîtier 1.

Le levier de commande 20 est porté par un verrou 21, monté à l'intérieur du boîtier de commande interne 1. Une cartouche de billage 27, disposée à la partie supérieure du verrou 21, est solidaire de celui-ci. Cette cartouche 27 comporte une bille 28 et un ressort de billage 29. La bille 28 est engagée dans l'une des trois gorges 40, 40', 40'' ménagées sur la partie supérieure du levier de commande 20, sous la pression du ressort de billage 29. De façon classique, la compression du ressort 29 lors de l'engagement de la bille 28 dans l'une des encoches 40, 40', 40'' procure au conducteur, la sensation de résistance attendue, lors du passage des vitesses.

Autour du corps de la cartouche de billage 27, est enroulé un ressort 30. Ce ressort assure le rappel de sélection de la transmission. Une de ses extrémités s'appuie sur un premier doigt de rappel 31, solidaire du verrou 21, tandis que son autre extrémité s'appuie sur un second doigt de rappel 32, solidaire de la plaque support 23.

La plaque support 23 comporte sur sa face arrière une grille de vitesses 39 n'apparaissant pas sur la figure 1, traversée par le doigt de guidage 33, solidaire du levier de commande 20. En arrière de la plaque support 23, on remarque la présence d'un troisième ressort 36, enroulé autour d'un axe de loqueteau 34. L'axe du loqueteau 34 est solidaire de la plaque support 23. Le loqueteau 35, est libre en rotation sur son axe 34. Le ressort 36 est un ressort de rappel du loqueteau 35 dont les deux extrémités s'appuient respectivement sur un premier doigt d'arrêt 37 solidaire de la plaque support, et sur un second doigt d'arrêt 38, solidaire du loqueteau 35.

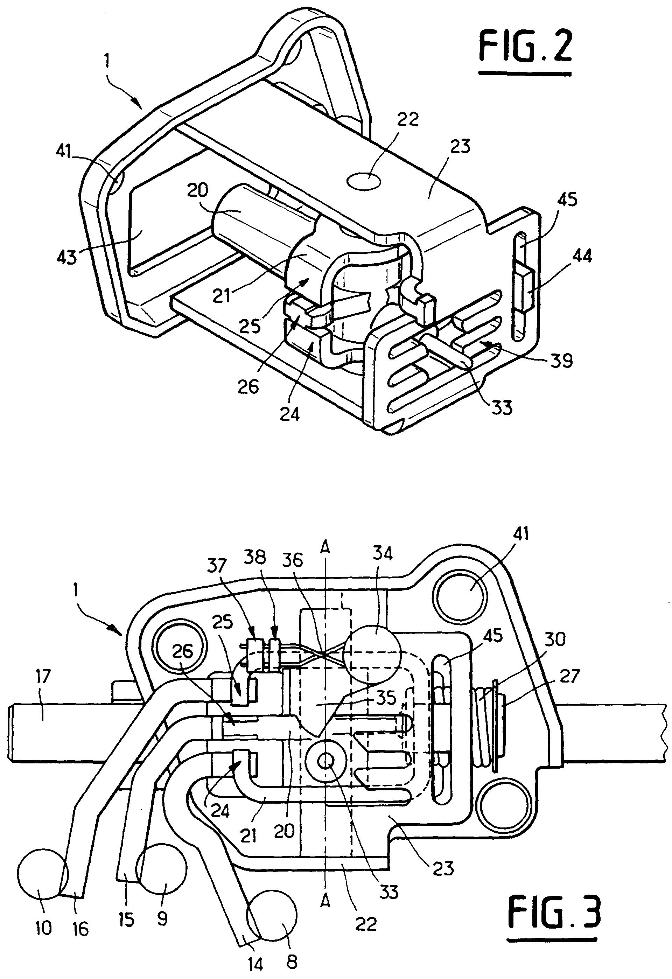

Sur la figure 2 on a représenté exclusivement le boîtier de commande interne 1, la plaque support 23, le levier de commande 20, le doigt de guidage 33 et le verrou 21. Cette figure indique la présence de points de fixation 41 du boîtier de commande interne 1 sur le carter d'embrayage 4. Comme indiqué plus haut, la sélection des vitesses se traduit par une rotation de l'axe de commande 17 et du doigt de commande 18 (non représentés sur cette figure) tandis que le passage des vitesses se traduit par une translation de ces deux éléments. Le doigt de commande 18 pénètre à l'intérieur du boîtier 1 par l'ouverture 43. La rotation du doigt de commande 18 et de l'axe de commande 17 entraîne le levier de commande 20 en translation, par l'intermédiaire de sa rotule 42. Le levier de commande 20 étant solidaire en translation du verrou 21 le long de l'axe vertical 22, monté sur la plaque support 23, la sélection des vitesses correspond à une translation verticale du verrou 21.

Le passage des vitesses se traduit par une rotation du levier de commande 20 autour du même axe vertical 22 car le levier de commande 20 est mobile en rotation autour de cet axe 22 tandis que le verrou est immobilisé en rotation par une joue de guidage 44 qui coulisse à l'intérieur d'une lumière 45 de forme allongée ménagée dans la plaque support 23. L'axe de commande 17 est libre en rotation d'une valeur minimale, correspondant à la sélection d'une des trois lignes de sélection, tandis qu'il est libre en translation d'une valeur permettant le passage des vitesses sur une même ligne de sélection. Le déplacement du doigt de guidage 33 au travers de la grille de vitesses 39 permet de contrôler les mouvements du levier de commande 20, les trois niveaux de la grille qui apparaissent sur la figure correspondant respectivement aux trois lignes de sélection de la transmission, à savoir la ligne première-seconde, la ligne seconde-troisième , et la ligne cinquième-marche arrière. Cette figure met également en évidence la présence d'un premier et d'un second tenon 24, 25 disposés de part et d'autre d'un doigt de manoeuvre 26 des crabots 14, 15, 16, sur un des côtés du verrou 21.

La figure 3 est une vue du boîtier de commande interne 1 selon la flèche B de la figure 1, et de l'axe de commande 17 situé en arrière de ce boîtier 1. La plaque support 23 ainsi que la grille de vitesses 39 et la lumière 45 ménagées dans celle-ci ont été représentées, à droite d'un axe vertical A-A, tandis qu'à gauche de cet axe, la plaque support 23 a été escamotée de façon à faire apparaître le verrou 21, le doigt de commande 20, les deux tenons 24, 25, et le doigt de manoeuvre 26 se trouvant en réalité en arrière de celle-ci. Cette figure permet également de faire apparaître la disposition relative des trois crabots 14, 15, 16 et des tenons 24, 25 lorsque le doigt de manoeuvre est engagé dans le crabot 15, c'est-à-dire lorsque la ligne de vitesse troisième-quatrième a été sélectionnée. Outre ces éléments, on reconnaît sur cette figure les points de fixation 41 du boîtier de commande interne 1 sur le carter d'embrayage 4, le loqueteau 35, l'axe de loqueteau 34, le ressort de loqueteau 36 et les deux doigts d'arrêt 37, 38 de celui-ci, ainsi que le doigt de guidage 33, la cartouche de billage 27 et le ressort de rappel de sélection 30.

Comme on l'aura compris, lors de la sélection des vitesses, la translation du verrou 21, le long de l'axe 22 positionne le doigt de manoeuvre 26 vis-à-vis des crabots 14, 15, 16. Ainsi sur la ligne de sélection troisième-quatrième, le doigt 26 coïncide avec le crabot 15, tandis que les deux crabots 14, 16 sont immobilisés par les deux tenons 24, 25. La translation du verrou vers le bas place le doigt 26 en vis-à-vis du crabot 14 associé à l'axe de fourchette 8 permettant le passage de la première et de la seconde, tandis que sa translation vers le haut, place le doigt 26 en vis-à-vis du crabot 16 associé à l'axe de fourchette 10 permettant le passage de la cinquième et de la marche arrière. Lors du passage des vitesses, la rotation du levier de commande 20 déplace en translation l'axe de fourchette et la fourchette sélectionnés. Par ailleurs, les déplacements du levier de commande 20 et du verrou 21 sont limités par le trajet du doigt de guidage 33 à l'intérieur de la grille de vitesses 39.

Le billage des vitesses est assuré par la cartouche de billage 27, la bille 28 et le ressort de billage 29, mentionnés plus haut. Le rappel de sélection est assuré par le ressort 30 monté sur la cartouche de billage 30, dont deux extrémités sont respectivement en appui sur les deux doigts de rappel 31, 32. Le verrouillage est obtenu grâce à l'immobilisation en rotation du verrou 21 au moyen de la joue 44 et grâce au maintien vertical du doigt de guidage 33 dans les branches de la grille de vitesses 39.

Outre ses qualités de compacité et de précision dans la transmission des ordres de sélection et de passage des vitesses aux axes de fourchettes et aux fourchettes, l'invention permet de regrouper dans un même boîtier de commande interne non seulement ces deux fonctions de sélection et de passage, mais encore les fonctions de billage et de verrouillage des vitesses, assurées habituellement indépendamment de celles-ci.

## Revendications

1. Mécanisme de commande interne de boîte de vitesses comportant un doigt de manoeuvre (26) des crabots (14, 15, 16) de la boîte, solidaire en translation et en rotation d'un verrou (21) de façon à assurer la sélection et le déplacement desdits crabots (14, 15, 16) sous le contrôle d'un axe de commande externe (17) pénétrant à l'intérieur du carter du mécanisme de la transmission, des organes de billage des vitesses (27, 28, 29) et des organes de verrouillage des lignes de vitesses non sélectionnées (24, 25), caractérisé en ce que ledit doigt de manoeuvre (26), ledit verrou (21) et lesdits organes de billage et de verrouillage (27, 28, 29, 24, 25) sont regroupés dans un boîtier de commande interne (1) fixé sur le carter d'embrayage (4) de la transmission, et en ce que le verrou (21) est solidaire d'un levier de commande (20) relié à l'axe de commande externe (17), et qui se déplace sur un axe vertical (22) lui-même monté sur un élément (23) dudit boîtier (1).

2. Mécanisme de commande interne selon la revendication 1, caractérisé en ce que l'élément (23) est constitué par une plaque support constituant la partie supérieure et la partie arrière du boîtier (1).

3. Mécanisme de commande interne selon les revendications 1 ou 2, caractérisé en ce que l'axe de commande (17) porte un doigt de commande (18) pénétrant à l'intérieur du boîtier de commande interne (1), de façon à déplacer le verrou (21) sur l'axe (22).

4. Mécanisme de commande interne selon la revendication 3, caractérisé en ce que le doigt de commande (18) présente une extrémité sphérique (42) pénétrant à l'intérieur d'un levier de commande (20) solidaire du verrou (21).

5. Mécanisme de commande interne selon la revendication 4, caractérisé en ce que le levier de commande (20) porte son extrémité opposée au doigt de commande (18), un doigt de guidage (33) pouvant se déplacer à l'intérieur d'une grille de vitesses (39) de façon à contrôler les mouvements du levier de commande (20) et du doigt de manoeuvre (26).

6. Mécanisme de commande interne selon la revendication 5, caractérisé en ce que la grille de vitesses (39) est ménagée sur la plaque de support (23).

7. Mécanisme de commande interne selon l'une des revendications précédentes, caractérisé en ce que les organes de billage (27, 28, 29) comportent une cartouche de billage (27) disposée à la partie supérieure du verrou (21) et coopérant avec le levier de commande (20).

8. Mécanisme de commande interne selon la revendication 7, caractérisé en ce que le rappel de sélection est assuré par un ressort de rappel de sélection (30), monté sur le corps de la cartouche de billage (27), une première extrémité de ce ressort étant en appui sur un premier doigt de rappel (31), solidaire du verrou (21), tandis que sa seconde extrémité est en appui sur un second doigt de rappel (32) solidaire de la plaque support (23).

9. Mécanisme de commande interne selon l'une des revendications 2 à 8, caractérisé en ce que le verrou présente une joue (44) pouvant se déplacer à l'intérieur d'une lumière de forme allongée (45) ménagée sur la plaque support (23) de façon à guider le verrou (21) en translation et à interdire sa rotation.

10. Mécanisme de commande interne selon l'une des revendications 5 à 9, caractérisé en ce que la plaque support (23) est munie d'un loqueteau (35) situé en regard de la grille de vitesses (39), de façon à interdire le passage de cinquième en marche arrière.

11. Mécanisme de commande interne selon la revendication 10, caractérisé en ce que le loqueteau (35) est libre en rotation sur un axe (34) porté par la plaque support (23), autour duquel est enroulé un ressort (36) dont une première extrémité est en appui sur un premier doigt d'arrêt (37) solidaire de la plaque support (23) et une seconde extrémité est en appui sur un second doigt d'arrêt (38) solidaire du loqueteau (35).

## Patentansprüche

1. Interne Steueranordnung für Getriebe, mit einem Betätigungszapfen (26) für Klauen (14,15,16) des Getriebes, der drehfest und verschiebefest mit einem Riegel (21) derart verbunden ist, daß die Auswahl und die Verschiebung der Klauen (14,15,16) gewährleistet ist mittels der Steuerung durch eine externe Steuerwelle (17), die in das Innere des Gehäuses der Getriebeanordnung eingreift, mit kugeldruckbeaufschlagenden Teilen (27,28,29) und mit Verriegelungsteilen (24,25) für die nicht ausgewählten Gangreihen, **dadurch gekennzeichnet**, daß der Betätigungszapfen (26), der Riegel (21) und die Teile für die Kugeldruckbeaufschlagung und für die Verriegelung (27,28,29; 24,25) in einem internen Steuergehäuse (1) zusammengefaßt sind, das an der Kupplungsglocke (4) der Kraftübertragung befestigt ist, und daß der Riegel (21) mit einem Steuerhebel (20) fest verbunden ist, der mit der externen Steuerwelle (17) verbunden ist, und der entlang einer senkrechten Achse (22) verschiebbar ist, die wiederum an einem Teil (23) des Gehäuses (1) angeordnet ist.

2. Interne Steueranordnung nach Anspruch 1, **dadurch gekennzeichnet**, daß das Teil (23) aus einer Tragplatte besteht, welche den oberen und hinteren Abschnitt des Gehäuses (1) bildet.

3. Interne Steueranordnung nach Ansprüchen 1 oder 2, **dadurch gekennzeichnet**, daß die Steuerwelle (17) einen Steuerzapfen (18) trägt, welcher in das Innere des internen Steuergehäuses (21) derart eingreift, daß der Riegel (21) an der Achse (22) verschiebbar ist.

4. Interne Steueranordnung nach Anspruch 3, **dadurch gekennzeichnet**, daß der Steuerzapfen (18) ein kugelförmiges Ende (42) aufweist, der sich in das Innere eines fest mit dem Riegel (21) verbundenen Steuerhebels (20) erstreckt.

5. Interne Steueranordnung nach Anspruch 4, **dadurch gekennzeichnet**, daß der Steuerhebel (20) an seinem dem Steuerzapfen (18) abgewandten Ende einen Führungszapfen (33) trägt, der sich im Inneren einer Schaltkulisse (39) derart bewegen kann, daß die Bewegungen des Steuerhebels (20) und des Betätigungszapfens (26) gesteuert werden.

6. Interne Steueranordnung nach Anspruch 5, **dadurch gekennzeichnet**, daß die Schaltkulisse (39) in der Tragplatte (23) ausgebildet ist.

7. Interne Steueranordnung nach einem der vorhergehenden Ansprüche, **dadurch gekennzeichnet**, daß die Kugeldruckbeaufschlagungsteile (27,28,29) eine Druckkugelbeaufschlagungskartusche (27) aufweisen, die im oberen Abschnitt des Riegels (21) angeordnet ist und mit dem Steuerhebel (20) zusammenwirkt.

8. Interne Steueranordnung nach Anspruch 7, **dadurch gekennzeichnet**, daß die Auswahlrückkehr gewährleistet wird durch eine Auswahlrückholfeder (30), die am Körper der Kugeldruckbeaufschlagungskartusche (27) angeordnet ist, wobei ein erstes Ende dieser Feder sich auf einem ersten Rückholzapfen (31) abstützt, der fest mit dem Riegel (21) verbunden ist, während sich ihr zweites Ende auf einem zweiten Rückholzapfen (32) abstützt, der fest mit der Tragplatte 23 verbunden ist.

9. Interne Steueranordnung nach einem der Ansprüche 2 bis 8, **dadurch gekennzeichnet**, daß der Riegel einen Anschlag (44) aufweist, der im Inneren einer langgestreckten Aussparung (45) verschiebbar ist, die in der Tragplatte (23) derart ausgebildet ist, daß sie eine Verschiebung des Riegels (21) ermöglicht, jedoch dessen Verdrehung verhindert.

10. Interne Steueranordnung nach einem der Ansprüche 5 bis 9, **dadurch gekennzeichnet**, daß die Tragplatte (23) mit einer Einrastanordnung (35) versehen ist, die gegenüber der Schaltkulisse (39) derart ausgebildet ist, daß ein Übergang vom fünften Gang in den Rückwärtsgang verhindert wird.

11. Interne Steueranordnung nach Anspruch 10, **dadurch gekennzeichnet**, daß die Einrastanordnung (35) frei drehbar an einer von der Tragplatte (23) getragenen Achse (34) angeordnet ist, wobei die Achse von einer Feder (36) umgeben ist, deren eines Ende sich auf einem ersten Haltezapfen (37) abstützt, der fest mit der Tragplatte (23) verbunden ist, und deren anderes Ende sich auf einem zweiten Haltezapfen (38) abstützt, der fest mit der Einrastanordnung (35) verbunden ist.

## Claims

1. Internal control mechanism of a gear box, comprising a finger (26) for manoeuvring the selector dogs (14, 15, 16) of the box, integral in translation and rotation of a lock (21) such as to provide the selection and movement of said selector dogs (14, 15, 16) under the control of an external control shaft (17) reaching into the interior of the transmission mechanism housing, components for detent ball engagement of the gears (27, 28, 29) and components for locking the lines of gears not selected (24, 25), characterised in that said manoeuvring finger (26), said lock (21) and said components for detent ball engagement and locking (27, 28, 29, 24, 25) are grouped together in an internal control box (1) fixed on the bell housing of the transmission, and in that the lock (21) is integral with a control lever (20) joined to the external control shaft (17), and which moves on a vertical shaft (22) which is itself mounted on an element (23) of said box (1).

2. Internal control mechanism according to claim 1, characterised in that the element (23) is constituted by a supporting plate constituting the upper part and the back part of the box (1).

3. Internal control mechanism according to claim 1 or 2, characterised in that the control shaft (17) carries a control finger (18) reaching into the inside of the internal control box (1), such as to move the lock (21) on the shaft (22).

4. Internal control mechanism according to claim 3, characterised in that the control finger (18) has a spherical extremity (42) reaching into the inside of a control lever (20) integral with the lock (21).

5. Internal control mechanism according to claim 4, characterised in that the control lever (20) has, on its extremity facing the control finger (18) a guide finger (33) which can move inside a gear shift gate (39) such as to control the movements of the control lever (20) and of the manoeuvring finger (26).

6. Internal control mechanism according to claim 5, characterised in that the gear shift gate (39) is arranged on the supporting plate (23).

7. Internal control mechanism according to one of the preceding claims, characterised in that the detent ball engagement components (27, 28, 29) comprise a detent ball engagement cartridge (27) disposed on the upper part of the lock (21) and cooperating with the control lever (20).

8. Internal control mechanism according to claim 7, characterised in that the selection return is provided by a selection return spring (30) mounted on the body of the detent ball engagement cartridge (27), a first extremity of said spring bearing on a first return finger (31) integral with the lock (21), while its second extremity bears against a second return finger (32) integral with the supporting plate (23).

9. Internal control mechanism according to one of claims 2 to 8, characterised in that the lock has a bar (44) which can move inside an elongated aperture (45) arranged on the supporting plate (23) such as to guide the lock (21) during translation and to prevent its rotation.

10. Internal control mechanism according to one of claims 5 to 9, characterised in that the supporting plate (23) is equipped with a catch (35) located facing the gear shift gate (39), such as to prevent passage from fifth gear to reverse.

11. Internal control mechanism according to claim 10, characterised in that the catch (35) rotates freely on a shaft (34) carried by the supporting plate (23) around which a spring (36) is wound, a first extremity of which spring bears against a first stop finger (37) integral with the supporting plate (23) and a second extremity bears against a second stop finger (38) integral with the catch (35).
